# DEMANDE DE BREVET EUROPEEN

(11) **EP 2 394 853 A1**
(43) Date de publication de la demande: **14.12.2011**
(21) Numéro de dépôt: 11169261.2
(22) Date de dépôt: 09.06.2011
(51) Int. Cl.: B60Q 1/46, H04B 10/10

(54) **Procédé de communication entre un véhicule émetteur et une cible**

(30) Priorité: 10.06.2010 FR 1054574
(71) Demandeur: VALEO VISION, 93012 Bobigny Cedex (FR)
(72) Inventeur: Zojceski, Zdravko, 92400 Courbevoie (FR); Dubosc, Christophe, 93250 Villemomble (FR)

(57) **Abrégé**

L'invention a pour objet un procédé de communication entre un véhicule automobile émetteur (Ve) et au moins une cible (4), le véhicule émetteur (Ve) comportant au moins un dispositif lumineux (2), le procédé comportant l'étape suivante :
- moduler automatiquement un signal lumineux (S) émis par le dispositif lumineux (2) en vue d'une communication entre le véhicule (Ve) et la cible (4) ;

le dispositif lumineux (2) étant choisi parmi : un dispositif d'éclairage, un feu de jour (DRL), un feu de position.

## Description

L'invention concerne notamment un procédé de communication entre un véhicule automobile émetteur et une cible.

Il est d'usage de faire des appels de phare, par exemple pour prévenir d'autres conducteurs d'un danger, en allumant et en éteignant rapidement et manuellement, un certain nombre de fois, l'éclairage de route (ou phare).

Dans le domaine automobile, de nombreux dispositifs d'éclairage utilisent des lampes halogènes ou à décharge, notamment de type Xénon.

Sur ces dispositifs, l'appel de phare présente habituellement les inconvénients suivants.

Le temps de montée lors de l'allumage d'une lampe Xénon peut être relativement long, ce qui ne permet pas de faire des flashes lumineux aussi rapprochés que l'on souhaite.

Le temps de montée et de descente, surtout à froid, pour une lampe halogène est, lui aussi, relativement long, ce qui pose le même type de problème que celui mentionné ci-dessus.

De plus, sur ce type de lampes halogènes et Xénon, il est difficile de fournir une surintensité lumineuse, à savoir une intensité lumineuse supérieure à l'intensité normale de fonctionnement.

Enfin, des appels de phare répétés provoquent une forte réduction de la durée de vie des lampes.

Par ailleurs, il existe un besoin pour communiquer aisément par exemple entre deux véhicules.

L'invention a notamment pour but de pallier les problèmes précités.

L'invention a ainsi pour objet un procédé de communication entre un véhicule automobile émetteur et au moins une cible, le véhicule émetteur comportant au moins un dispositif lumineux, le procédé comportant l'étape suivante :
- moduler automatiquement un signal lumineux émis par le dispositif lumineux en vue d'une communication entre le véhicule et la cible.

Selon l'invention, le dispositif lumineux est de préférence choisi parmi : un dispositif d'éclairage tel qu'un faisceau de croisement, de route ou anti-brouillard, ou, en variante, un dispositif de signalisation tel qu'un feu de jour (Daytime Running Light en anglais, ou DRL) ou un feu de position.

Grâce à l'invention, la communication avec par exemple un autre véhicule peut être faite sans gêner le conducteur du véhicule émetteur.

Ceci peut être particulièrement avantageux dans le cas d'un appel de phare par exemple, car les impulsions lumineuses pour cet appel de phare peuvent être générées automatiquement, sans que le conducteur ait à exécuter des mouvements compliqués avec ses doigts qui peuvent gêner la conduite.

L'invention permet ainsi d'améliorer la sécurité pendant la conduite.

De préférence, le dispositif lumineux comporte au moins une diode électroluminescente agencée pour participer au signal lumineux modulé.

L'invention permet ainsi différents avantages.

Par exemple, il est possible de profiter, pour la mise en oeuvre de l'invention, de la présence de diodes électroluminescentes (LEDs) et d'un dispositif de commande associé déjà présents sur le véhicule.

De plus, une diode électroluminescente présente des temps de montée à l'allumage et de descente à l'extinction très courts par rapport notamment à une lampe halogène ou à décharge.

Enfin, une LED permet de produire des rafales d'impulsions lumineuses fréquentes sans dégrader sa durée de vie, contrairement par exemple à une lampe halogène ou à une lampe à décharge.

Avantageusement, le signal lumineux modulé du dispositif lumineux est agencé pour être perceptible par l'oeil humain.

Le cas échéant, la longueur d'onde du signal lumineux modulé ainsi produit par le dispositif lumineux est choisie dans le domaine visible du spectre de la lumière.

Dans un exemple de mise en oeuvre de l'invention, le signal lumineux modulé est modulé en intensité lumineuse, notamment de manière périodique.

Avantageusement, le signal lumineux ainsi modulé comprend un train d'impulsions lumineuses, notamment des impulsions lumineuses périodiques de période constante ou progressive, le nombre d'impulsions étant par exemple compris entre 1 et 10 par train d'impulsions.

De préférence, la durée entre deux maxima d'intensité lumineuse consécutifs est comprise entre 100ms et 300ms.

Dans un exemple de mise en oeuvre de l'invention, le dispositif lumineux est agencé pour remplir une fonction photométrique réglementaire prédéterminée telle qu'un éclairage de route, un éclairage de croisement, un feu de jour (Daytime Running Light en anglais, ou DRL), un feu de position, un éclairage antibrouillard.

Le signal lumineux modulé correspond, dans ce cas, à la modulation, par exemple en intensité lumineuse, de ladite fonction photométrique prédéterminée.

Si on le souhaite, le signal lumineux est modulé de manière à atteindre des valeurs d'intensité lumineuse supérieures à la valeur d'intensité lumineuse nominale de la fonction photométrique associée.

Avantageusement, la fonction photométrique associée au dispositif lumineux correspond à un éclairage de route.

Dans un autre exemple de mise en oeuvre de l'invention, le dispositif lumineux est agencé de manière à participer uniquement à l'émission du signal lumineux modulé, sans produire une quelconque fonction photométrique réglementaire.

Dans un exemple de mise en oeuvre de l'invention, le signal lumineux modulé présente une intensité maximale suffisamment élevé pour que le signal lumineux modulé puisse être distingué de la luminosité ambiante et suffisamment faible pour ne pas gêner une personne au voisinage du véhicule émetteur.

L'intensité maximale du signal lumineux modulé est de préférence suffisamment élevée pour que ce signal puisse être distingué des fonctions photométriques réglementaires du véhicule.

Dans un exemple de mise en oeuvre de l'invention, la modulation automatique du signal lumineux est générée par le dispositif lumineux, sans l'aide de mécanisme mobile.

Par exemple, la modulation du signal lumineux est générée électroniquement, notamment à l'aide d'un microcontrôleur ou d'un pilote informatique.

Dans un autre exemple de mise en oeuvre de l'invention, le signal lumineux modulé est agencé pour être imperceptible à l'oeil humain.

Par exemple, le signal lumineux est modulé selon une fréquence suffisamment élevée, pour rendre les variations de son intensité invisibles à l'oeil humain.

Le cas échéant, les variations en amplitude du signal lumineux sont suffisamment faibles pour qu'elles soient imperceptibles à l'oeil humain.

Si on le souhaite, le signal lumineux modulé présente une longueur d'onde hors du domaine visible de la lumière.

Le cas échéant, la cible de la communication comporte au moins un capteur électronique photosensible, capable de capter le signal lumineux modulé.

Dans un exemple de mise en oeuvre de l'invention, la cible de la communication est un véhicule tiers, notamment situé dans le voisinage du véhicule émetteur.

Dans un autre exemple de mise en oeuvre de l'invention, la cible de la communication est une installation fixe, telle qu'une borne ou un relais, par exemple installée sur le bord d'une route.

Si on le souhaite, le véhicule émetteur comporte un capteur électronique photosensible agencé pour recevoir un signal lumineux modulé émis, en vue d'une communication, par un dispositif lumineux d'un véhicule tiers ou d'une installation fixe.

Le cas échéant, la communication est à la fois montante et descendante, le véhicule émetteur et la cible étant à la fois émetteur et récepteur.

Avantageusement, le signal lumineux modulé est agencé pour transporter au moins une information, notamment binaire, et le capteur électronique photosensible de la cible est relié à une unité de traitement capable de traiter cette information.

Par exemple, l'information transportée par le signal lumineux modulé est relative :
- à l'environnement du véhicule émetteur, par exemple à l'état de circulation autour du véhicule émetteur ou à des conditions climatiques,
- à l'état du véhicule émetteur, par exemple à un état de panne du véhicule,
- à un message, par exemple un message personnel.

Dans un exemple de mise en oeuvre de l'invention, l'émission du signal lumineux modulé est déclenché par un dispositif de commande manuelle, c'est-à-dire commandable par une personne. Un dispositif de commande manuelle peut, le cas échéant, signifier un dispositif commandable par la voix d'une personne.

Ledit dispositif de commande manuelle peut être un dispositif interne au véhicule choisi dans la liste non limitative suivante :
- une pédale,
- une manette,
- un bouton,
- une poignée,
- un levier,
- une glissière,
- un volant,
- un écran tactile.

Dans un autre exemple de mise en oeuvre de l'invention, ledit dispositif de commande peut être externe au véhicule choisi dans la liste non limitative suivante :
- une télécommande,
- un téléphone,
- un PDA/smartphone,
- un ordinateur.

Dans un autre exemple de mise en oeuvre de l'invention, l'émission du signal lumineux modulé est déclenchée par un dispositif de commande automatique.

Le cas échéant, ledit dispositif de commande automatique est agencé pour traiter une information sur l'environnement du véhicule, comme par exemple la présence d'un accident sur la route.

Cette information sur l'environnement du véhicule peut être obtenue par un dispositif d'acquisition, choisi par exemple dans la liste non limitative suivante :
- un capteur comme par exemple un CCD,
- un détecteur infrarouge,
- une ou plusieurs photodiode,
- un système de géolocalisation,
- un accéléromètre,
- un système de mesure de la vitesse du véhicule,
- un goniomètre,
- une LED.

L'invention à également pour objet un système de communication entre un véhicule automobile émetteur et une cible, ce système comportant :
- au moins un dispositif lumineux,
- un dispositif de modulation permettant de moduler automatiquement le signal lumineux émis par le dispositif lumineux en vue d'une communication entre le véhicule et la cible.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, un système de communication selon un exemple de mise en oeuvre de l'invention ;
- la figure 2 représente, schématiquement et partiellement, un chronogramme d'un signal lumineux émis au sein du système de la figure 1 ;
- la figure 3 représente, schématiquement et partiellement, un chronogramme d'un signal lumineux émis en surintensité au sein du système de la figure 1 ;
- la figure 4 représente, schématiquement et partiellement, un système de communication utilisant des données binaires, selon un autre exemple de mise en oeuvre de l'invention ;
- la figure 5 représente, schématiquement et partiellement, un chronogramme d'un signal lumineux émis au sein du système de la figure 4 ;
- la figure 6 représente, schématiquement et partiellement, un système de communication émetteur-récepteur selon un autre exemple de mise en oeuvre de l'invention ; et
- les figure 7, 8 et 9 représentent, schématiquement et partiellement, différents dispositifs de commande d'un système de communication selon des exemples de mise en oeuvre de l'invention.

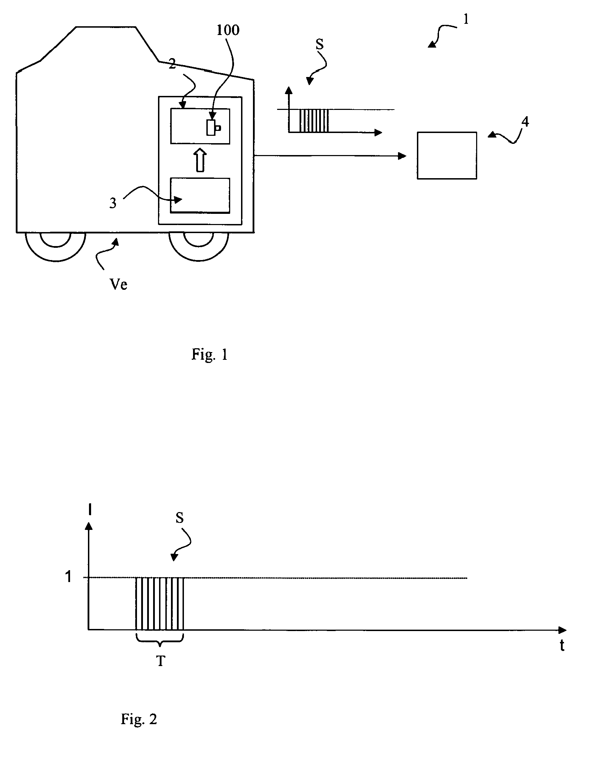

On a représenté sur la figure 1 un système de communication 1 selon un exemple de mise en oeuvre de l'invention, ce système étant monté sur un véhicule émetteur Ve et permettant une communication entre le véhicule émetteur Ve et une cible 4.

Ce système comporte :
- un dispositif lumineux 2, capable d'émettre un signal lumineux S,
- un dispositif de modulation 3, permettant de moduler automatiquement le signal lumineux S.

La cible 4 est, dans l'exemple décrit, un usager de la route, par exemple un piéton ou un conducteur d'un autre véhicule.

Le dispositif lumineux 2 comprend au moins une LED 100.

Ce dispositif lumineux 2 est agencé pour produire une fonction photométrique réglementaire 'éclairage de route'.

Le dispositif de modulation automatique 3 est par exemple un microcontrôleur ou un driver.

Le dispositif de modulation automatique 3 permet de moduler un signal lumineux émis par le dispositif lumineux 2 de la manière décrite sur la figure 2.

Comme on peut le voir, le signal lumineux modulé S comprend un train T d'impulsions lumineuses périodiques, comprenant par exemple 9 impulsions, la période des impulsions du train T étant par exemple égale à 200ms.

L'intensité lumineuse maximale du signal lumineux modulé, dans l'exemple décrit, est sensiblement égale à celle de la fonction 'éclairage de route' produite par le dispositif lumineux 3.

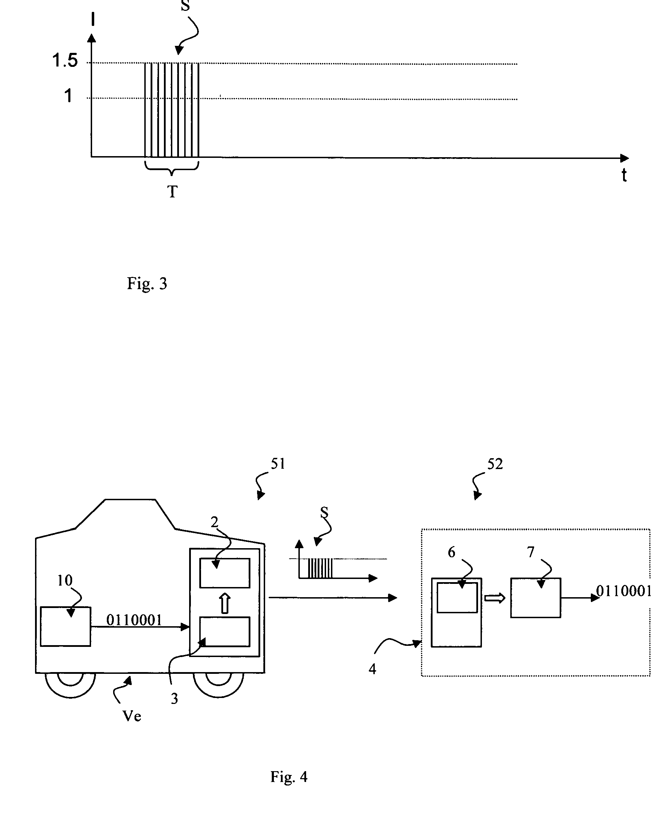

En variante, comme on peut le voir sur la figure 3, l'intensité maximale du signal lumineux est supérieure à celle de la fonction 'éclairage de route'.

Par exemple, cette intensité maximale est égale à 1,5 fois celle de la fonction 'éclairage de route'.

Dans l'exemple qui vient d'être décrit, le système de communication 1 permet de réaliser un appel de phare de signal S en modulant automatiquement l'éclairage de route.

On a représenté sur la figure 4 un premier système de communication 51, monté sur un véhicule émetteur Ve, et un deuxième système de communication 52, monté sur une cible 4, selon un autre exemple de mise en oeuvre de l'invention.

Les systèmes 51 et 52 permettent une communication entre le véhicule émetteur Ve et la cible 4.

Dans l'exemple décrit, la cible 4 est un véhicule tiers ou une installation fixe. Le premier système de communication 51 comporte :
- un dispositif lumineux 2, capable d'émettre un signal lumineux S,
- un dispositif de modulation 3, permettant de moduler automatiquement le signal lumineux S,
- une unité de commande 10, reliée au dispositif de modulation 3.

Le dispositif lumineux 2 comprend au moins une LED, non représentée ici.

Le dispositif lumineux 2 est agencé pour produire un signal lumineux modulé S dont les caractéristiques optiques diffèrent d'une quelconque fonction photométrique réglementaire.

La longueur d'onde du signal lumineux S est hors du spectre visible de la lumière, rendant ce signal S imperceptible à l'oeil humain.

L'unité de commande 10 est agencée pour générer des informations binaires relatives à l'environnement du véhicule émetteur, comme par exemple l'état du trafic routier, à destination de la cible 4.

Le deuxième système de communication 52 comporte :
- un capteur électronique photosensible 6, capable de recevoir le signal lumineux modulé S,
- une unité de traitement 7, reliée au capteur 6.

Le capteur électronique photosensible 6 est par exemple une caméra ou une photodiode 6.

L'unité de traitement 7 est agencée pour traiter le signal lumineux modulé S afin de décoder l'information générée par l'unité de commande 10 du véhicule émetteur Ve.

Cette unité de traitement 7 est par exemple un démodulateur associé à un décodeur.

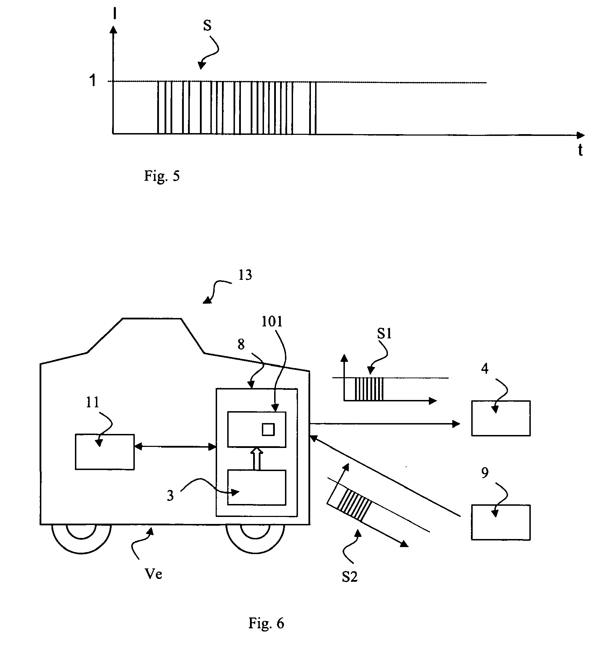

Le dispositif de modulation automatique 3 module un signal lumineux émis par le dispositif lumineux 2, en fonction des informations binaires produites par l'unité de commande 10, de la manière décrite sur la figure 5.

Comme on peut le voir sur cette figure, le signal lumineux modulé S comprend un train d'impulsions lumineuses.

La modulation est cadencé à une fréquence suffisamment élevée, par exemple à environ 1000Hz, pour la rendre imperceptible à l'oeil humain.

Dans l'exemple décrit, la modulation utilisée est une modulation tout-ou-rien, aussi appelée 'On Off Keying', où chaque bit d'information généré par l'unité de commande 10 est transmis sans être codé.

En variante, d'autres modulations peuvent être utilisées, en association avec des unités de codage correcteur ou compresseur.

Dans l'exemple qui vient d'être décrit, les systèmes de communication 51 et 52 permettent de transmettre des informations binaires en modulant automatiquement un signal lumineux émis par le véhicule émetteur Ve.

On a représenté sur la figure 6 un système de communication 13 monté sur un véhicule Ve, selon un autre exemple de mise en oeuvre de l'invention.

Le système de communication 13 permet une communication montante entre le véhicule Ve et une cible 4 et une communication descendante entre le véhicule Ve et un émetteur tiers 9.

Le système de communication 13 comporte :
- un dispositif lumineux 8, capable d'émettre un signal lumineux S1 et de recevoir un signal lumineux S2,
- un dispositif de modulation 3, permettant de moduler automatiquement le signal lumineux S1,
- une unité de traitement 11 reliée au dispositif de modulation 3.

Dans l'exemple décrit, l'émetteur tiers 9 et/ou la cible 4 sont montés sur des véhicules tiers ou des installations fixes.

L'émetteur tiers 9 est capable d'émettre un signal lumineux modulé S2, transportant une information destiné au véhicule émetteur Ve.

Le dispositif lumineux 8 comprend au moins une LED, non représentée ici, et au moins un capteur électronique photosensible 101, pour recevoir le signal S2.

Le dispositif lumineux 8 peut être agencé pour produire un signal lumineux modulé S1 dont les caractéristiques optiques diffèrent d'une quelconque fonction photométrique réglementaire.

La longueur d'onde du signal lumineux S1 peut être hors du spectre visible de la lumière, rendant ce signal S1 imperceptible à l'oeil humain.

L'unité de traitement 11 est agencée pour :
- générer des informations binaires relatives à l'environnement du véhicule émetteur, comme par exemple l'état du trafic routier, à destination de la cible 4,
- traiter le signal lumineux modulé S2 reçu afin de décoder l'information transmise par l'émetteur tiers 9.

Cette unité de traitement 11 est par exemple un codeur/décodeur.

Dans l'exemple qui vient d'être décrit, le système de communication 13 permet de transmettre des informations binaires à une cible 4 en modulant automatiquement un signal lumineux émis par le véhicule émetteur Ve et/ou de recevoir et traiter des informations binaires transmises par un émetteur tiers 9.

Avantageusement, la cible 4 et l'émetteur tiers 9 sont intégrés sur un même système de communication, ce système de communication étant par exemple monté sur un autre véhicule.

L'invention permet donc dans ce cas, une communication montante et descendante entre les deux véhicules afin d'améliorer la conduite ainsi que la sécurité routière.

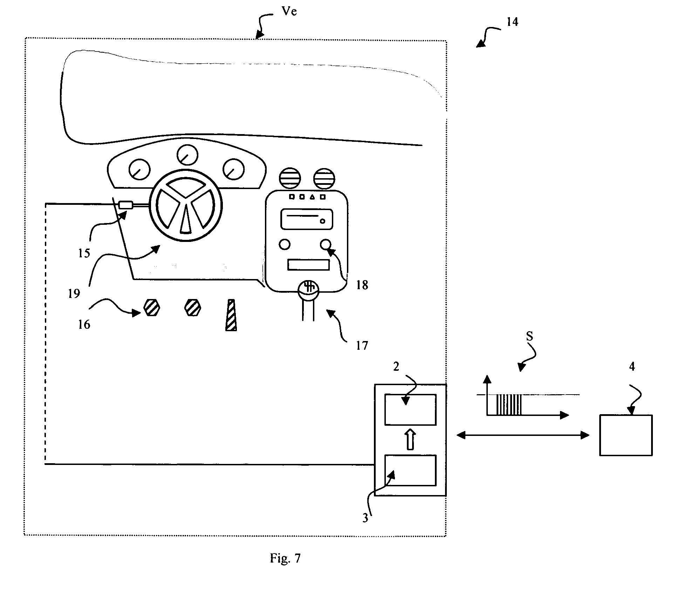

On a représenté sur la figure 7 un système de communication 14 monté sur un véhicule Ve, selon un autre exemple de mise en oeuvre de l'invention.

Le système 14 permet une communication déclenchée manuellement, entre le véhicule émetteur Ve et la cible 4.

Dans l'exemple décrit, la cible 4 est un véhicule tiers ou une installation fixe. Le système de communication 14 comporte :
- un dispositif lumineux 2, capable d'émettre un signal lumineux S,
- un dispositif de modulation 3, permettant de moduler automatiquement le signal lumineux S,
- un dispositif de commande manuelle, monté dans l'habitacle du véhicule émetteur Ve.

Le dispositif de commande manuelle est choisi dans la liste suivante : un bouton 18, une manette 15, des pédales 16, un levier 17 ou un volant 19.

L'émission du signal lumineux modulé S est déclenchée dès l'activation du dispositif de commande manuelle.

Dans l'exemple qui vient d'être décrit, le système de communication 14 permet de réaliser un appel de phare automatique, déclenché manuellement, par exemple lors de l'activation d'un bouton dédié.

L'invention ne limite pas aux dispositifs de commande manuelle décrits ci-dessus.

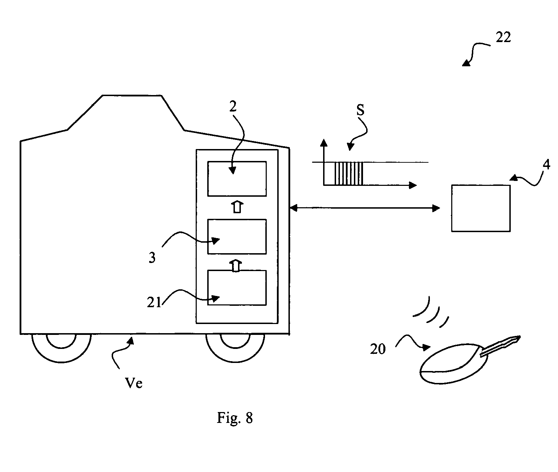

Par exemple, on a représenté sur la figure 8 un système de communication 22 monté sur un véhicule émetteur Ve.

Ce système de communication 22 est identique au système de communication 14 représentée sur la figure 7, à l'exception du fait que le dispositif 20 de commande manuelle est portatif et qu'un dispositif d'acquisition de signal 21 est prévu dans le véhicule émetteur Ve.

Le dispositif de commande manuelle 20 est par exemple une télécommande 20, qui permet l'ouverture à distance des portes du véhicule émetteur Ve.

Le dispositif d'acquisition de signal 21 est capable de recevoir un signal du dispositif de commande manuelle 20 et ainsi de déclencher lors de la détection de ce signal, l'émission du signal lumineux modulé S.

Ceci permet par exemple au propriétaire du véhicule de repérer facilement son véhicule, par exemple sur un parking.

Dans l'exemple qui vient d'être décrit, le système de communication 22 est déclenchable depuis l'extérieur de l'habitacle du véhicule Ve.

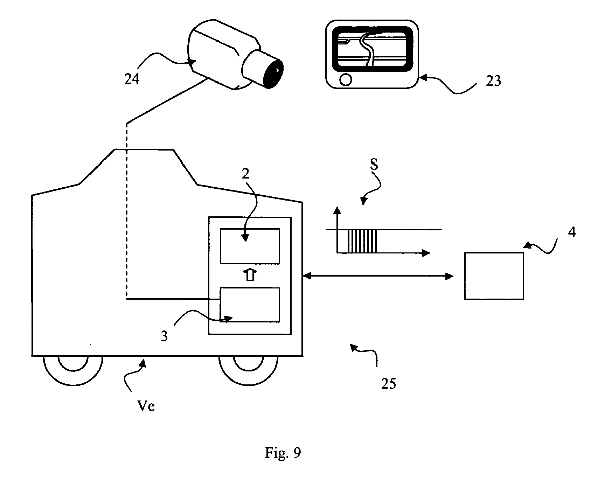

On a représenté sur la figure 9 un système de communication 25 monté sur un véhicule émetteur Ve, selon un autre exemple de réalisation de l'invention.

Le système de communication 25 est identique au système de communication 14 représenté sur la figure 7, à l'exception du fait que le dispositif de commande associé est automatique.

Le dispositif de commande automatique est agencé pour traiter une information sur l'environnement du véhicule, comme par exemple la présence d'un accident sur la route.

Cette information sur l'environnement du véhicule peut être obtenue par un dispositif d'acquisition, tel qu'une système de géolocalisation 23 ou une caméra 22.

## Revendications

1. Procédé de communication entre un véhicule automobile émetteur (Ve) et au moins une cible (4), le véhicule émetteur (Ve) comportant au moins un dispositif lumineux (2), le procédé comportant l'étape suivante :
- moduler automatiquement un signal lumineux (S) émis par le dispositif lumineux (2) en vue d'une communication entre le véhicule (Ve) et la cible (4),
le dispositif lumineux (2) étant choisi parmi : un dispositif d'éclairage, un feu de jour (DRL), un feu de position.

2. Procédé selon la revendication précédente, **caractérisé par le fait que** le dispositif lumineux (2) comporte au moins une diode électroluminescente (100) agencée pour participer au signal lumineux modulé (S).

3. Procédé selon l'une des revendications précédentes, **caractérisé par le fait que** le signal lumineux modulé (S) est agencé pour être perceptible par l'oeil humain.

4. Procédé selon l'une des revendications précédentes, **caractérisé par le fait que** le dispositif lumineux (2) est agencé pour remplir une fonction photométrique réglementaire prédéterminée, choisie parmi :
- un faisceau route,
- un faisceau de croisement,
- un feu DRL (Daytime Running Light),
- un feu de signalisation ou
- un faisceau antibrouillard;
le signal lumineux modulé (S) correspondant à la modulation de la fonction photométrique prédéterminée.

5. Procédé selon l'une des revendications précédentes, **caractérisé en ce que** le dispositif lumineux (2) est capable de produire un éclairage de route et que le signal lumineux modulé (S) correspond à la modulation de cet éclairage de route.

6. Procédé selon l'une des revendications précédentes, **caractérisé en ce que** la cible (4) comporte au moins un capteur électronique photosensible (6), agencé pour capter le signal lumineux modulé (S).

7. Procédé selon l'une des revendications précédentes, **caractérisé par le fait que** le véhicule émetteur (Ve) comporte un capteur électronique photosensible (101) agencé pour recevoir un signal lumineux modulé (S2) émis par un dispositif d'éclairage et/ou de signalisation d'un véhicule tiers (9).

8. Procédé selon l'une des revendications précédentes, **caractérisé par le fait que** le signal lumineux modulé (S) est agencé pour transporter au moins une information, notamment binaire.

9. Procédé selon la revendication précédente, **caractérisé en ce que** l'information transportée par le signal lumineux modulé (S) est relative par exemple à un état de circulation autour du véhicule émetteur (Ve), à l'état du véhicule émetteur (Ve), à un message.

10. Procédé selon la revendication précédente, **caractérisé par le fait que** l'émission du signal lumineux modulé (S) est générée par un dispositif de commande automatique (23,24).

11. Système de communication entre un véhicule automobile émetteur (Ve) et une cible (4), ce système comportant :
- au moins un dispositif lumineux (2),
- un dispositif de modulation (3) permettant de moduler automatiquement le signal lumineux (S) émis par le dispositif lumineux (2) en vue d'une communication entre le véhicule (Ve) et la cible (4).

12. Système selon la revendication précédente, **caractérisé par le fait que** le dispositif lumineux (2) est agencé pour remplir une fonction photométrique réglementaire prédéterminée, choisie parmi :
- un faisceau route,
- un faisceau de croisement,
- un feu DRL (Daytime Running Light),
- un feu de signalisation ou
- un faisceau antibrouillard;
le signal lumineux modulé (S) correspondant à la modulation de la fonction photométrique prédéterminée.
